(19) Europäisches Patentamt
European Patent Office
Office européen des brevets

(11) EP 3 299 516 B1

(12) # EUROPEAN PATENT SPECIFICATION

(45) Date of publication and mention of the grant of the patent:
**15.01.2020 Bulletin 2020/03**

(21) Application number: **17197161.7**

(22) Date of filing: **18.10.2017**

(51) Int Cl.:
***D06P 3/66*** *(2006.01)*
***D06P 5/30*** *(2006.01)*
***D06P 1/38*** *(2006.01)*
***D06P 3/10*** *(2006.01)*
***C09D 11/328*** *(2014.01)*
***C09B 67/22*** *(2006.01)*

(54) **INKJET TEXTILE PRINTING INK AND INKJET TEXTILE PRINTING METHOD**

TINTENSTRAHLTEXTILDRUCKFARBE UND TINTENSTRAHLTEXTILDRUCKVERFAHREN

ENCRE POUR L'IMPRESSION SUR TEXTILE À JET D'ENCRE ET PROCÉDÉ D'IMPRESSION SUR TEXTILE À JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2016 JP 2016183793**

(43) Date of publication of application:
**28.03.2018 Bulletin 2018/13**

(73) Proprietor: **Konica Minolta, Inc.**
**Tokyo 100-7015 (JP)**

(72) Inventor: **Nakamura, Masaki**
**Tokyo, 100-7015 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
**EP-A1- 0 709 520**
**CN-U- 204 455 453**
**JP-A- 2001 131 882**
**JP-B2- 2 932 621**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 299 516 B1

## Description

## BACKGROUND OF THE INVENTION

### 1. Field of the Invention

The present invention relates to inkjet textile printing inks and inkjet textile printing methods.

### 2. Description of Related Art

Screen textile printing and roller textile printing, which employ plates, have been conventionally conducted as textile printing methods. The production efficiency of such textile printing was low because production of plates was required prior to dyeing. In recent years, so-called inkjet textile printing, which forms an image on recording media such as cloths by the inkjet method, is widely conducted because production of plates is not necessary and its production efficiency is high.

In inkjet textile printing, minute ink droplets are allowed to eject from an inkjet recording head and to be landed on a recording medium such as a cloth to thereby form an image. Types of colorants contained in inks used in inkjet textile printing include acidic dyes, disperse dyes, reactive dyes, and pigments. For formation of an image on a cloth mainly based on cellulose, reactive dyes are usually used.

For the purpose of forming an image having a high color density, a cloth is usually pre-treated to allow inks to easily remain on the surface of the cloth.

Meanwhile, inkjet textile printing applies inks only from one surface of a cloth. Thus, in the case of shop curtains and flags, in which colors are represented at a predetermined density or higher without color irregularity on both front and back surfaces of the cloth, it is necessary to allow inks to remain on the front surface as well as to penetrate to the back surface of the cloth. However, when inks are allowed to easily penetrate to the back surface of the cloth, the color density on the front surface of the cloth tends to decrease; when inks are allowed to easily remain on the front surface of the cloth, the color density on the back surface of the cloth tends to decrease. It has been difficult to increase the color density both on the front and back surfaces and reduce the difference in the color density between the front and back surfaces (color density ratio).

As a method for reducing the color density ratio between the front and back surfaces of a cloth, an inkjet textile printing method including use of an ink containing an organic solvent in an amount of 41 to 95 mass% has been proposed (for example, Japanese Patent Application Laid-Open No. 2001-89982). This method adjusts the content of the organic solvent in the ink to adjust the penetrability of the ink to the cloth. A cloth for inkjet textile printing is also proposed, which includes two water-soluble neutral salts composed of a salt A in which its anion has a salting-out ability greater than that of an acetate ion and a salt B in which its anion has a salting-out ability equal to or smaller than that of an acetate ion (for example, Japanese Patent Application Laid-Open No. 9-279488). This cloth has portions having a different penetrability in order to adjust the penetrability of ink.

The method of Japanese Patent Application Laid-Open No. 2001-89982, however, has not been able to sufficiently reduce the color density ratio between the front and back surfaces because the reactive dyes contained in the ink are composed only of reactive dyes having a constant penetrability. The method of Japanese Patent Application Laid-Open No. H9-279488 has not been able to adjust the penetrability sufficiently in some cases depending on the type of reactive dye.

## SUMMARY OF THE INVENTION

The present invention has prepared in the view of above situations, and an object of the present invention is to provide an inkjet textile printing ink capable of sufficiently reduce the color density ratio of an image between its front and back surfaces and an inkjet textile printing method including use of the ink.

The present invention can provide an inkjet textile printing ink capable of sufficiently reduce the color density ratio between the front and back surfaces of an image and an inkjet textile printing method including use of the ink.

## BRIEF DESCRIPTION OF DRAWING

The advantages and features provided by one or more embodiments of the invention will become more fully understood from the detailed description given hereinbelow and the appended drawings which are given by way of illustration only, and thus are not intended as a definition of the limits of the present invention:

FIG. 1 partially and schematically illustrates an example of the configuration of an inkjet textile printing apparatus.

## DESCRIPTION OF THE PREFERRED EMBODIMENTS

The present inventors have found that a combination of "a first reactive dye including a relatively large number of sulfonate groups" and "a second reactive dye including a relatively large number of amide groups and/or hydroxy groups" may reduce the difference in the color density between the front and back surfaces (color density ratio) of a cloth including a hydrophilic resin having a hydroxy group applied thereon.

A reason for this is not clear and is assumed as follows. That is, the hydrogen bonding ability of a sulfonate group is lower than those of an amide group and a hydroxy group. Thus, the first reactive dye including a relatively large number of sulfonate groups hardly forms hydrogen bonds with hydroxy groups possessed by the cloth, and thus easily penetrates to the back surface of the cloth to thereby increase the color density of the back surface. In contrast, the hydrogen bonding ability of the amide group and hydroxy group is higher than that of the sulfonate group. Accordingly, the second reactive dye including a relatively large number of amide groups and/or hydroxy groups easily forms hydrogen bonds with hydroxy groups possessed by the cloth, and is thus easily remains on the front surface of the cloth to thereby increase the color density of the front surface. In this manner, a combination of the first reactive dye and the second reactive dye of different penetrabilities can increase the color densities of the front and back surfaces simultaneously, and thus can reduce the difference in the color density between the images on the front and back surfaces. Particularly, the hydroxyethylsulfonyl groups that may be contained in the second reactive dye are likely to increase the color density of the image of the front surface because the hydroxyethylsulfonyl groups undergo dehydration reaction at a temperature of 95°C or more to become vinylsulfonyl groups, which react with hydroxy groups of the hydrophilic resin applied to the cloth.

Furthermore, setting the hue difference between the first reactive dye and the second reactive dye to a predetermined value or less (the dyes preferably have the same pigment base material) can also reduce the hue difference between the front and back surfaces of the cloth. The present invention has been achieved based on such findings.

### 1. Inkjet Textile Printing Ink

The inkjet textile printing ink of the present invention includes a reactive dye, a water-soluble organic solvent, and water.

#### 1-1. Reactive Dye

The reactive dye included in the inkjet textile printing ink of the present invention includes a "first reactive dye that has at least a sulfonate group and optionally further has an amide group and/or hydroxy group" and a "second reactive dye that has at least an amide group and/or hydroxy group and optionally further has a sulfonate group".

In this case, the number of sulfonate groups contained in one molecule of the second reactive dye is smaller than the number of sulfonate groups contained in one molecule of the first reactive dye; the total number of sulfonate groups, amide groups, and hydroxy groups contained in one molecule of the second reactive dye is equivalent to the total number of sulfonate groups, amide groups, and hydroxy groups contained in one molecule of the first reactive dye. Incidentally, in the present invention, the sulfonate group is a group represented by $-SO_3H$ or $-SO_3M$ (M is a monovalent metal atom), and the amide group is a group represented by -NHCO-.

The difference in the number of the sulfonate groups contained in one molecule between the first reactive dye and the second reactive dye is associated with the difference in the penetrability between the first reactive dye and the second reactive dye. In other words, when the difference in the number of the sulfonate groups between the first reactive dye and the second reactive dye is large, the difference in the penetrability increases, but with an extremely large difference, the color density ratio between the front and back surfaces may increase. Thus, the difference in the number of the sulfonate groups contained in one molecule between the first reactive dye and the second reactive dye is preferably adjusted to an appropriate range, and is preferably 1 or 2.

The hue difference $\Delta S^*$, which is represented by a distance on an ab-plane in the CIE 1976 L*a*b* color system between the first reactive dye and the second reactive dye, is preferably 4 or less.

The hue difference $\Delta S^*$ between the first dye and second dye can be determined in accordance with the following method.

A 20 ppm aqueous solution of the first dye and a 20 ppm aqueous solution of the second dye are each prepared, and the absorption spectrum of each solution is determined. The absorption spectra obtained are converted to L*, a*, and b* by using conversion software. As the conversion software, chromaticity conversion software of SHIMADZU CORPORATION, attached to a double-beam spectrophotometer manufactured by SHIMADZU CORPORATION, can be used. Then, the hue difference $\Delta S^*$ is determined from the color representation values of the first reactive dye ($L_1^*$, $a_1^*$, $b_1^*$) and the color representation values of the second reactive dye ($L_2^*$, $a_2^*$, $b_2^*$) based on the following expression.

$$\Delta S^* = [(a_2^* - a_1^*)^2 + (b_2^* - b_1^*)^2]^{1/2}$$

(First Reactive Dye)

The first reactive dye is preferably a reactive dye having a sulfoxyethylsulfonyl group ($-SO_2-CH_2CH_2-O-SO_3Na$) from the viewpoint of its satisfactory reactivity with a cloth. The reactive dye having a sulfoxyethylsulfonyl group has a structure represented by the following general formula (1):

$$D^1-SO_2-CH_2CH_2-O-SO_3M \qquad (1)$$

$D^1$ in the formula (1) represents a pigment base material. The pigment base material may further have at least one of an amide group, a hydroxy group, and a sulfonate group. Examples of the pigment base material include pyrazolone azo-based, γ-acid azo-based, H-acid azo-based, anthraquinone-based, and H-acid disazo-based ones.
M in the formula (1) represents a monovalent metal cation. Examples of the monovalent cation include a Na ion.

The first reactive dye causes the following reaction in the presence of an alkali.

$$D^1-SO_2-CH_2CH_2-O-SO_3M \qquad (1)$$

$$\rightarrow D^1-SO_2CH=CH_2 + HO-SO_3M \qquad (1')$$

In this manner, the reactive dye having a structure represented by the general formula (1) takes the structure represented by the general formula (1') by addition of an alkali. The vinyl groups included in the structure undergo nucleophilic addition reaction with hydroxy groups of a cloth to allow the reactive dye to react with the cloth.
The number of yl groups included in the first reactive dye is one or two or more. The first reactive dye may have two or more functional groups that react with a cloth from the viewpoint of enhancing its dyeing affinity to the cloth, and one or more of the two or more functional groups should be a sulfoxyethylsulfonyl group. An example of the functional group other than the sulfoxyethylsulfonyl group includes a monochloro triazine group (monochloro-substituted 1,3,5-triazin-2-yl group).
Examples of the bifunctional reactive dye having two reactive functional groups include reactive dyes having two sulfoxyethylsulfonyl groups in one molecule (hereinbelow, the dyes are also referred to as sulfoxyethylsulfonyl type homo-bifunctional reactive dye) and reactive dyes having one sulfoxyethylsulfonyl group and one monochloro triazine group in one molecule (hereinbelow, the dyes are also referred to as hetero-bifunctional reactive dyes). Reactive dyes having a sulfonate group are preferably sulfoxyethylsulfonyl-type homo-bifunctional reactive dyes from the viewpoint of further enhancing their dyeing affinity to the cloth.
In the case in which the first reactive dye is a hetero-bifunctional reactive dye, in the reaction of the first reactive dye with a cloth, nucleophilic substitution reaction may occur in addition to the nucleophilic addition reaction described above. This reaction is caused by the nucleophilic substitution reaction of the chloro group contained in the monochloro triazine group possessed by the hetero-bifunctional reactive dye with the hydroxyl group of the cloth.
Examples of the first reactive dye include C.I. Reactive Yellow 15, 37, and 42; C.I. Reactive Orange 16, 74, and 107; C.I. Reactive Red 23, 35, 106, and 180; C.I. Reactive Violet 5; C.I. Reactive Blue 19, 21, 38, 222, and 229; C.I. Reactive Brown 18; and C.I. Reactive Black 5, 14, and 31. Of these, C.I. Reactive Black 5, which is a vinylsulfone-type homo-bifunctional reactive dye, is preferred.
One of the first reactive dyes or two or more of these may be used.

(Second Reactive Dye)

The second reactive dye is preferably a reactive dye having a hydroxyethylsulfonyl group ($-SO_2-CH_2CH_2-OH$) from the viewpoint that its affinity with the first reactive dye is easily obtainable. The reactive dye having a hydroxyethylsulfonyl group has a structure represented by the following general formula (2):

$$D^2-SO_2-CH_2CH_2-OH \qquad (2)$$

$D^2$ in the formula (2) represents a pigment base material. The pigment base material may further have at least one

of an amide group, a hydroxy group, and a sulfonate group.

$D^2$ in the formula (2) is not particularly limited provided that the hue difference between the first reactive dye and the second reactive dye falls within the above range, and may be the same as or different from $D^1$ in the formula (1). $D^2$ in the formula (2) is preferably the same as $D^1$ in the formula (1) from the viewpoint that the hue difference between the first reactive dye and the second reactive dye may be further reduced.

The number of hydroxyethylsulfonyl groups included in the second reactive dye is one or two or more. The second reactive dye may have two or more functional groups that form hydrogen bonds with hydroxy groups possessed by the cloth from the viewpoint of easily remaining on the front surface of the cloth, and one or more of the two or more functional groups should be a hydroxyethylsulfonyl group.

The second reactive dye may further one or more functional groups that react with a cloth from the viewpoint of enhancing its dyeing affinity to the cloth. Examples of such functional groups include a hydroxyethylsulfonyl group and a monochloro triazine group.

Examples of the second reactive dye include those having a structure in which a sulfoxyethylsulfonyl group is replaced by a hydroxyethylsulfonyl group in reactive dyes shown in the specific examples of the first reactive dye.

One of the second reactive dyes or two or more of these may be used.

(Common Points)

The first reactive dye, which includes a relatively large number of sulfonate groups having a low hydrogen bonding ability, as aforementioned, hardly forms hydrogen bonds with hydroxy groups of a cloth and thus easily penetrates to the back surface of the cloth. In contrast, the second reactive dye, which includes a relatively large number of amide groups and hydroxy groups having a high hydrogen bonding ability, easily forms hydrogen bonds with hydroxy groups of a cloth and thus easily remains on the front surface of the cloth. Accordingly, adjusting the content ratio between the first reactive dye and the second reactive dye can increase the color densities of the front and back surfaces of the cloth with a good balance therebetween.

Specifically, the content ratio between the first reactive dye and the second reactive dye is preferably first reactive dye/second reactive dye = 95/5 to 50/50 (mass ratio). When the content ratio described above is a certain value or more, the content of the first reactive dye increases, and thus the color density of the back surface of the cloth sufficiently increases with ease. When the content ratio described above is below a certain value, the content of the second reactive dye increases, and thus the color density of the front surface of the cloth sufficiently increases with ease. The content ratio between the first reactive dye and the second reactive dye in a mass ratio is preferably first reactive dye/second reactive dye = 90/10 to 80/20 (mass ratio).

The total content of the first reactive dye and the second reactive dye is preferably 30mass% or more and may be 100mass% based on the total mass of the reactive dye.

The content of the reactive dye contained in the inkjet textile printing ink of the present invention is preferably 1 to 35mass% based on the total mass of the ink. With 1mass% or more, the color density of the image is easily increased. In contrast, with 35mass% or less, the ejection stability of the ink is hardly impaired. The content of the reactive dye is more preferably 3 to 30mass% based on the total mass of the ink.

1-2. Water-soluble Organic Solvent

The water-soluble organic solvent contained in the inkjet textile printing ink of the present invention is not particularly limited provided that the solvent can dissolve the reactive dyes aforementioned.

Examples of the water-soluble organic solvent include:

alcohols, such as methanol, ethanol, propanol, isopropanol, butanol, isobutanol, sec-butanol, and t-butanol;

polyhydric alcohols, such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol;

amines, such as ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine);

amides, such as formamide, N,N-dimethylformamide, and N,N-dimethylacetamide;

heterocycles, such as 2-pyrrolidone, N-methyl-2-pyrrolidone, cyclohexylpyrrolidone, 2-oxazolidone, and 1,3-dimethyl-2-imidazolidinone ; and

sulfoxides, such as dimethyl sulfoxide.

1-3. Other Additives

The ink of the present invention may further contain other additives such as a pH adjuster, a buffering agent, a urea compound, a surfactant, a preservative agent, and an anti-mold agent.

(pH Adjuster)

Examples of the pH adjuster may include citric acid, sodium citrate, and sodium hydroxide. When the ink further contains a pH adjuster, the pH of the ink can be adjusted to a desired value.

(Urea compound)

Examples of the urea compound include urea, thiourea, alkyl-substituted ureas, and alkylthioureas and more specifically include urea, ethyleneurea, dimethylurea, monomethylthiourea, thiourea, and dimethylthiourea. Of these, in respect of increasing the storage stability of the ink, ethyleneurea is preferred. The urea compound may increase the dyeing affinity of the reactive dye to a cloth.

(Surfactant)

Examples of the surfactant include dialkyl sulfosuccinates, alkyl naphthalene sulfonates, polyoxyethylene alkyl ethers, polyoxyethylene alkyl allyl ethers, acetylene glycols, polyoxyethylene-polyoxypropylene block copolymers, alkylamines, quaternary ammonium salts, silicon-based surfactants, and florine-based surfactants. Of these, acetylene glycol-based surfactants, which have a relatively low foamability, can adjust the surface tension of the ink. Thus, the injectability of the ink from an inkjet recording head is easily increased.

(Preservative Agent and Anti-mold Agent)

Examples of the preservative agent and anti-mold agent include aromatic halogen compounds (such as Preventol CMK), methylene diisocyanate, halogen-containing nitrogen-sulfur compounds, and 1,2-isothiazolin-3-one (such as PROXEL GXL). The preservative agent and anti-mold agent increase the storage stability of the ink.

1-4. Ink Physical Properties

The pH of the inkjet textile printing ink of the present invention preferably falls within the range of 4 to 7. When the pH is within the above range, both the first reactive dye and the second reactive dye aforementioned are likely to be stable. The pH of the ink can be measured at 25°C by using an HM-20S pH meter manufactured by DKK-TOA CORPORATION.

The inkjet textile printing ink of the present invention has an ink viscosity at 25°C of preferably 1 to 40 mPa·s, more preferably 5 to 40 mPa·s, still more preferably 5 to 20 mPa·s from the viewpoint of its injectability from an inkjet recording head.

The surface tension of the ink at 25°C is preferably 30 to 60 mN/m. When the surface tension of the ink is 30 mN/m or more, the wettability of the ink to a cloth does not extremely increase, and thus, blurring of the image are more easily reduced. In contrast, when the surface tension is 60 mN/m or less, the wettability of the ink to a cloth is not extremely low, and thus the penetrability of the ink to a cloth is hardly impaired.

1-5. Preparation of Ink

The inkjet textile printing ink of the present invention is produced through mixing the reactive dye aforementioned, a water-soluble organic solvent, water, and other components as required.

2. Inkjet Textile Printing Method

The inkjet textile printing method employing the inkjet textile printing ink of the present invention includes forming an image on a cloth including a hydrophilic resin having a hydroxy group applied by ejecting a droplet of the inkjet textile printing ink of the present invention from a recording head, and fixing the image by heating the cloth having the image formed thereon.

Specifically, the inkjet textile printing method of the present invention includes (1) applying a pretreatment agent to a cloth (pretreatment), (2) ejecting a droplet of a textile printing ink to form an image on the cloth including the

pretreatment agent applied thereto (ink application), and (3) fixing the dye landed on the cloth onto fibers (color development) and may further include (4) drying the cloth after the ink application (preliminary drying), (5) removing the dye and pretreatment agent that failed to dye in the cloth (washing), and (6) drying the washed cloth (drying) as required.

(Pretreatment)

Pretreatment is applying a pretreatment agent to a cloth. Examples of a method for applying a pretreatment agent to a cloth include pad methods, coating methods, spray methods, and inkjet methods. These methods enable application of the pretreatment agent to the cloth. Examples of the cloth including the pretreatment agent applied thereto include cloths having an ink reception layer, described in Japanese Patent Application Laid-Open No. 62-53492, and cloths containing a reduction inhibitor and an alkaline agent, described in Japanese Examined Patent Application Publication No. 3-46589.

From the viewpoint of obtaining a homogeneous image, natural impurities attached to the cloth (oils and fats, wax, pectin substances, natural pigments, and the like), residues of chemicals used in the cloth production process (such as pastes), or stains attached to the cloth are preferably washed off before a pretreatment agent is applied to a cloth. Detergents for washing the cloth contain an alkaline agent such as sodium hydroxide or sodium carbonate, an anionic or nonionic surfactant, or an enzyme and the like.

The pretreatment agent preferably contains at least a resin component, an alkaline agent, and a hydrotropy agent and, in addition to these, may further contain additives such as a reduction inhibitor, a preservative agent, or a chelating agent.

The resin component preferably contains a hydrophilic resin having a hydroxy group. Examples of the hydrophilic resin having a hydroxy group include natural gums such as guar and locust bean, starches, sodium alginate, seaweeds such as funori, vegetable skins such as pectin acid, cellulose derivatives such as methyl cellulose, ethyl cellulose, hydroxyethyl cellulose, and carboxymethyl cellulose, processed starches such as roasted starch, alpha-starch, carboxymethyl starch, carboxyethyl starch, and hydroxyethyl starch, processed natural gum such as shiratsu gum and roast bean gum, synthetic pastes or emulsions such as alginate derivatives, polyvinyl alcohol and polyacrylic acid esters.

Examples of the alkaline agent include alkali metal hydroxides such as sodium hydroxide and potassium hydroxide, amines such as mono-, di-, and tri-ethanolamines, alkali metal carbonates or bicarbonates such as sodium carbonate, potassium carbonate, and sodium bicarbonate (sodium hydrogen carbonate), organic acid metal salts such as calcium acetate and barium acetate, ammonia and ammonium compounds, and compounds serving as an alkaline agent under steaming or dry heat, such as sodium trichloroacetate. Of these, sodium carbonate and sodium hydrogen carbonate are preferred. The amount of the alkaline agent to be applied is preferably 0.1 to 10mass%, more preferably 0.5 to 5mass% based on the total mass amount of the cloth. When a moderate amount of the alkaline agent exists in the cloth, the textile printing ink including the reactive dye is reliably allowed to dye in the cloth. Thus, the cloth is preferably allowed to include the alkaline agent in advance.

Examples of the hydrotropy agent include urea, and alkyl ureas such as ethylene urea, dimethylurea, thiourea, monomethylthiourea, and dimethylthiourea. This is because addition of the hydrotropy agent improves the image density.

The amount (pick-up rate) of the pretreatment agent to be applied, or the amount of the resin component contained in the pretreatment agent are appropriately set depending on the type of the cloth and its application.

The pretreatment agent may further contain a reduction inhibitor, a preservative agent, or a chelating agent, as required. The reduction inhibitor should be sodium m-nitrobenzenesulfonate or the like. The preservative agent of the pretreatment agent may be a preservative agent exemplified as the preservative agent of the textile printing ink or may be the same as the preservative agent of the textile printing ink. The chelating agent should be ethylenediamine tetraacetate, nitrilotriacetate, hexamethaphosphate, pyrophosphate, or methaphosphate.

The pretreatment agent applied to the cloth can be heated and dried by use of hot air, a hot plate, a heat roller or the like.

A fiber material constituting the cloth is not particularly limited provided that a hydrophilic resin having a hydroxy group is applied (as the pretreatment agent) to the material. From the viewpoint of increasing the dyeing affinity, the material preferably includes fibers that can be dyed by a reactive dye, that is, fibers having a hydroxy group. Examples of the fiber having a hydroxy group include cellulose fibers such as cotton and protein fibers such as silk. The cloth may be any of a woven fabric, a non-woven fabric, and a knitted fabric formed by these fibers. The cloth that may be used in the present invention may be constituted only by fibers that can be dyed by a reactive dye, or may be a blended woven fabric or blend non-woven fabric of rayon, polyurethane, polyester, acryl, or the like. The fineness of a fiber constituting the cloth is preferably in the range of 10 to 100 d.

(Ink Application)

Ink application is ejecting a droplet of a textile printing ink from an inkjet recording head toward a cloth to form

an image before color development. While the cloth is moved relatively with respect to a head carriage onto which a plurality of inkjet recording heads are loaded, droplets of the inkjet textile printing ink set are allowed to be ejected and be landed on the cloth. The temperature of the front surface of the cloth when the ink droplets are landed is not particularly limited. From the viewpoint of suppressing blurring of the image before color development, the cloth is preferably heated in the range of 35 to 70°C.

(Preliminary Drying)

Preliminary drying is drying the cloth after the ink application. In the preliminary drying, without particular limitation, the cloth is dried preferably for 0.5 to 30 minutes at 150°C or less. Examples of a drying method include an air convection system, a heating roll direct-connecting system, and a radiation system. Specifically, a cloth should be subjected to ink application, and the cloth should be dried under the above conditions by the above method before the cloth is rolled up.

(Color Development)

Color development is heating the cloth after the ink application (after the preliminary drying if included) to allow the reactive dye that does not sufficiently dye in the cloth to dye in the cloth to thereby develop the original hues of the ink.

From the viewpoint of allowing the reactive dye to robustly dye in the cloth, the color development temperature (heating temperature) is preferably 95°C or more and less than 220°C, more preferably 95°C or more and 190°C or less, still more preferably 100°C or more and 180°C or less, depending the color development method (heating method).

The color development method (heating method) may be a conventionally-known method and is selected as appropriate depending on the textile printing ink, cloth, and the like. Example of the method include steaming by steam; baking by dry heat, thermosol; and an HT steamer by overheated steam. Of these, a system for allowing the reactive dyes in an ink to fix the dyes by high-temperature steam (steaming system) and a dry heat system (baking system) are preferred.

In the steaming system, which employs high-temperature steam, a large amount of liquid water exists when the heating temperature is extremely low. Thus, a reactive dye contained in a dark-colored dye or a light-colored ink becomes likely to form hydrogen bonds with liquid water in addition to the cloth. Then, the dye is likely to flow off with water and may not be able to dye in the cloth sufficiently. Accordingly, from the viewpoint of allowing the reactive dye to robustly dye in the cloth, the heating temperature is preferably 95°C or more, more preferably 100°C or more. For example, cellulosic fibers are preferably treated at 95 to 105°C for 5 to 15 minutes, and amide-based fibers such as silk and wool are preferably treated at 95 to 105°C for 20 to 40 minutes. The cloth including the ink applied thereto may be allowed to develop color immediately or may be allowed to develop color after a lapse of time.

In the baking system by means of dry heat, from the viewpoint that a sufficient dyeing affinity is easily obtained and degradation of the dyes is suppressed, the heating temperature is preferably 150°C or more and less than 220°C, more preferably 150°C or more and 190°C or less, still more preferably 150°C or more and 180°C or less.

(Washing)

Washing is removing the reactive dye and pretreatment agent that failed to dye in the cloth after the color development of the cloth. Removal of the reactive dye that failed to dye in the cloth can employ a conventionally-known washing method, which is selected as appropriate depending on the textile printing ink, cloth, and the like. For example, cellulose fibers are generally rinsed with water, rinsed with hot water, and then treated in a soaping bath. Thereafter, the fibers are rinsed with water and rinsed with hot water. Removal of the unfixed reactive dye is likely to enable washing fastness, water fastness, perspiration fastness, and the like to be satisfactory. When the reactive dye that failed to dye in the cloth exists, washing fastness, water fastness, perspiration fastness, and the like are hardly obtained.

(Drying)

Drying, which follows the washing, is drying the washed cloth. The drying method is not particularly limited and is may be a method for drying the washed cloth by squeezing, airing, or using a drying machine (such as a heat roll or iron).

2-2. Inkjet Textile Printing Apparatus

Hereinafter, an apparatus that performs the ink application and the preliminary drying will be described with reference to the accompanying drawing, but the inkjet recording apparatus used for the inkjet textile printing apparatus is not limited thereto.

FIG. 1 partially and schematically illustrates an example of the configuration of an inkjet textile printing apparatus. The inkjet textile printing apparatus includes conveying section 2 that conveys cloth P, head carriage 5 loaded with a plurality of inkjet recording heads (not illustrated) that ejects droplets of inkjet textile printing inks to cloth P, and warm-air-adding section 6 that adds warm air to cloth P.

Conveying section 2 includes adhesive belt 21, support roller 22, conveying roller 23, and nip roller 24. Adhesive belt 21 is held by support roller 22 and conveying roller 23, and is circulated among support rollers 22 and conveying roller 23. Nip roller 24 is disposed so as to face conveying roller 23 with adhesive belt 21 interposed therebetween.

Warm-air-adding section 6 and head carriage 5 are disposed above cloth P. Warm-air-adding section 6 includes therein fan 6A that blows wind on the cloth and heating element 6B that is capable of controlling the temperature. Meanwhile, head carriage 5 includes inkjet recording heads. The type of the inkjet recording head may be either a thermal head or a piezo head. The nozzle diameter of the inkjet recording head is preferably 10 to 100 μm, and more preferably 10 to 50 μm. This is because nozzle clogging hardly occurs due to insoluble matters when the nozzle diameter is 10 μm or more and because the sharpness of the formed image is hardly lowered when the nozzle diameter is 100 μm or less. Further, the size of an ink droplet to be ejected is preferably 4 to 150 pl, more preferably 5 to 80 pl. This is because the ejected ink droplets are hardly influenced by an air stream near the head when the size of the ink droplet is 4 pl or more and because granular feeling of the formed image is hardly conspicuous when the size of the ink droplet is 150 pl or less.

When conveying roller 23 is driven, cloth P disposed on the upper surface of adhesive belt 21 is conveyed to the lower surface of nip roller 24. Cloth P is pressurized by adhesive belt 21 and nip roller 24, and is fixed onto adhesive belt 21. Cloth P fixed on adhesive belt 21 is conveyed to a location below head carriage 5. A plurality of inkjet recording heads loaded in head carriage 5 ejects ink droplets of the inkjet textile printing inks and lands the ink droplets on a certain area (landable area) of the cloth including a pretreatment agent is applied thereon to form an image. Then, temperature-controlled air or warm air is blown from warm-air-adding section 6 to dry the image formed on cloth P.

Hereinafter, the present invention will be described specifically by way of Examples, but the present invention is not construed to be limited by these Examples.

1. Ink Material

(Reactive dye)

(First Reactive Dye)

Dye A-1:

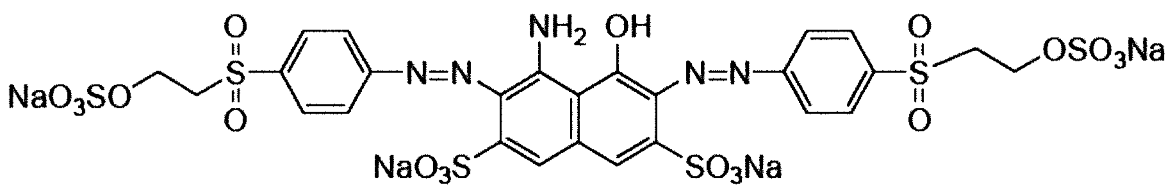

Dye A-2:

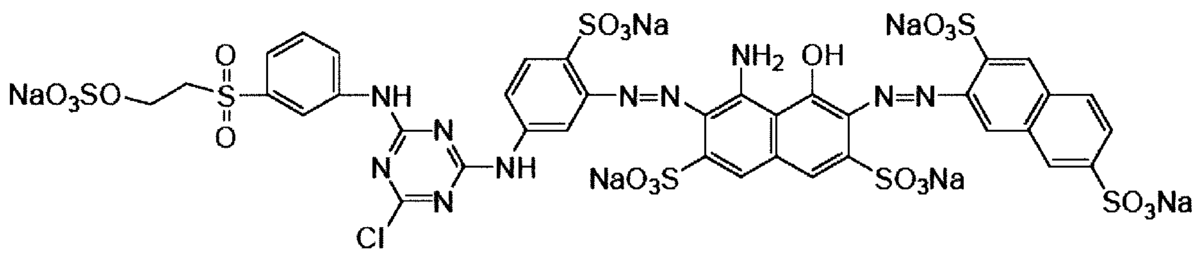

Dye A-3:

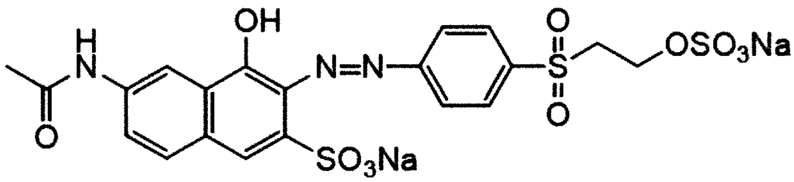

Dye A-4:

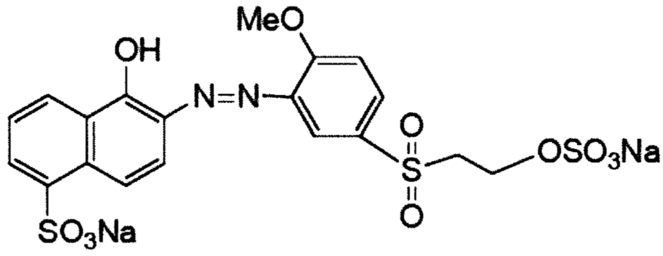

(Second Reactive Dye)

Dye B-1:

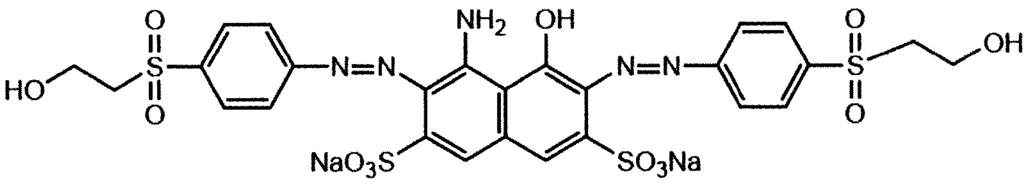

Dye B-2:

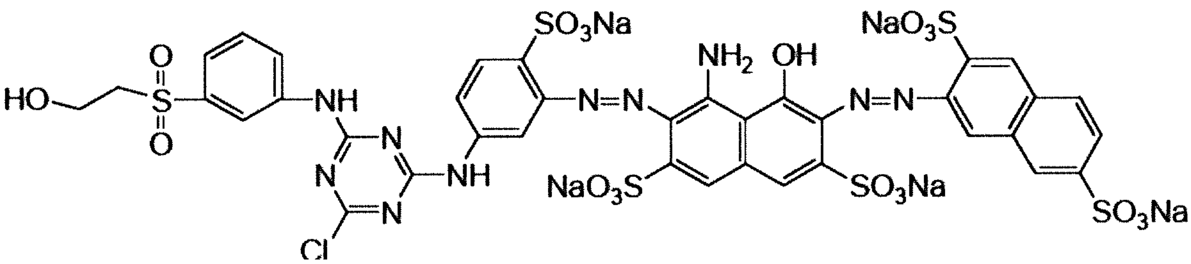

Dye B-3:

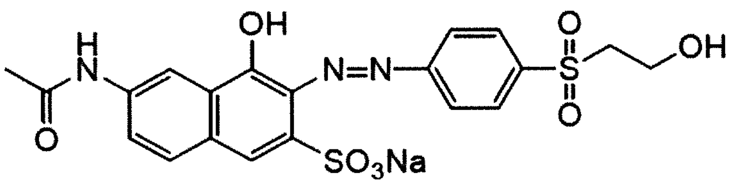

Dye B-4:

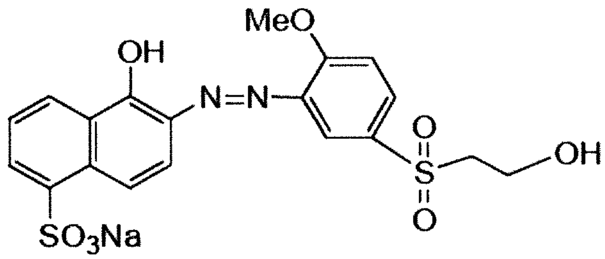

(pH Adjuster)

Citric acid

Sodium citrate

2. Preparation and Evaluation of Ink

(Example 1)

Mixed were 9.5 parts by mass of Dye A-1 (first reactive dye) and 0.5 parts by mass of Dye B-1 (second reactive dye) as reactive dyes, 20 parts by mass of ethylene glycol, 10 parts by mass of propylene glycol, and 5 parts by mass of ε-caprolactam as water-soluble organic solvents, and an appropriate amount of citric acid and sodium citrate as pH adjusters. Ion-exchanged water was added to the mixture obtained such that the total amount reached 100 parts by mass to prepare Ink 1. Incidentally, citric acid and sodium citrate were added in an amount to allow the pH of the ink to be 7.0. The pH of the ink was measured at 25°C by using an HM-20S pH meter manufactured by DKK-TOA CORPORATION.

(Hue Difference of Dyes)

A 20 ppm aqueous solution of Dye A-1 (first reactive dye) and a 20 ppm aqueous solution of Dye B-1 (second reactive dye) were each prepared, and the absorption spectrum of each solution was determined with a spectrophotometer. The absorption spectrum obtained was converted to color representation values (L*, a*, b*) by using chromaticity conversion software of SHIMADZU CORPORATION. Subsequently, the hue difference ΔS* was determined from the color representation values of Dye A-1 (first dye) ($L_1$*, $a_1$*, $b_1$*) and the color representation values of Dye B-1 (second dye) ($L_2$*, $a_2$*, $b_2$*) in accordance with the following expression:

$$\Delta S^* = [(a_2^* - a_1^*)^2 + (b_2^* - b_1^*)^2]^{1/2}$$

As a result, the hue difference between Dye A-1 and Dye B-1 was less than 4.

The ink obtained was used to form an image in accordance with the following procedure by the inkjet textile printing method.

<Image Formation>

(Pretreatment)

A 100% cotton cloth (mercerized cotton broadcloth, manufactured by Shikisensha Co., Ltd.) was provided. After the following pretreatment agent was applied to the cloth at a pick-up rate of 80%, the cloth was dried.

(Composition of Pretreatment Agent)

Sodium alginate (resin component): 5 parts by mass
Urea (hydrotropy agent): 10 parts by mass
Sodium hydrogen carbonate (alkaline agent): 5 parts by mass
Ion-exchanged water: 80 parts by weight

(Ink Application)

The inks prepared in Examples 1 to 6 and Comparative Examples 1 to 2 were set in Nassenger V (manufactured by Konica Minolta, Inc.) to form a 10 cm × 10 cm solid image of 540 dpi in the main scanning direction × 540 dpi in the sub scanning direction on the pretreated cloth. Incidentally, dpi represents the number of ink droplets (dots) per 2.54 cm.

(Color Development)

The cloth having the image formed thereon was subjected to steam treatment under conditions of a relative humidity of 100% and a temperature of 100°C for 10 minutes to allow the dyes to be fixed and to develop their color.
Then, the front surface density, back surface density, and color density ratio between the front and back surfaces of the image formed were evaluated by the following method.

<Image Evaluation>

(Front Surface Density, Back Surface Density, and Density Ratio)

The front surface density and back surface density of the solid image obtained were each measured with a Minolta Spectrophotometer CM-2022. From the front surface density and back surface density obtained, their ratio (front surface density/back surface density) was calculated. A smaller color density ratio between the front surface and the back surface is preferred because this means that the difference in the color density between the front and back surfaces is smaller.

(Examples 2 to 10 and Comparative Examples 1 and 2)

Inks 2 to 9 were prepared in the same manner as in Example 1 except that the combination and composition of reactive dyes were changed as shown in Table 1.
Then, the inks obtained were used to form an image by the inkjet textile printing method in the same manner as in Example 1 except that the reaction conditions in the color development were changed as shown in Table 1, and image evaluation was carried out.
The evaluation results of the inks of Examples 1 to 10 and Comparative Examples 1 and 2 are shown in Table 1. In the table, HT indicates the high temperature steaming method (H. T. steaming method); and DT indicates the dry heating method (baking method). Incidentally, when the hue difference between the first dye and the second dye used in Example 2 to Comparative Example 2 was measured by the same method as in Example 1, it was confirmed that the hue difference $\Delta S^*$ between the two dyes was less than 4 in all the samples.

[Table 1]

| | Ink No. | Reactive dye | | | Reaction conditions in color development | | | Evaluation results | | |
|---|---|---|---|---|---|---|---|---|---|---|
| | | First reactive dye | Second reactive dye | *Composition ratio (first/second) | Reaction method | Reaction temperature (°C) | Reaction time (min) | Front surface density | Back surface density | Front surface/back surface density ratio |
| Example 1 | 1 | A-1 | B-1 | 9.5/0.5 | HT | 100 | 10 | 19.3 | 8.2 | 2.4 |
| Example 2 | 2 | A-1 | B-1 | 8.5/1.5 | HT | 90 | 10 | 12.8 | 2.8 | 4.6 |
| Example 3 | | A-1 | B-1 | 8.5/1.5 | HT | 95 | 10 | 17.6 | 6.5 | 2.7 |
| Example 4 | | A-1 | B-1 | 8.5/1.5 | HT | 103 | 10 | 18.4 | 7.8 | 2.4 |
| Example 5 | | A-1 | B-1 | 8.5/1.5 | DT | 170 | 3 | 17.8 | 5.6 | 3.2 |
| Example 6 | 3 | A-1 | B-1 | 5/5 | HT | 100 | 10 | 19.2 | 7.7 | 2.5 |
| Example 7 | 4 | A-1 | B-1 | 4/6 | HT | 100 | 10 | 17.8 | 6.9 | 2.6 |
| Example 8 | 5 | A-2 | B-2 | 8.5/1.5 | HT | 103 | 10 | 17.3 | 7.8 | 2.2 |
| Example 9 | 6 | A-3 | B-3 | 8.5/1.5 | HT | 103 | 10 | 14.3 | 7.3 | 2.0 |
| Example 10 | 7 | A-4 | B-4 | 8.5/1.5 | HT | 100 | 10 | 18.5 | 7.9 | 2.3 |
| Comparative Example 1 | 8 | A-1 | - | 10/0 | HT | 98 | 10 | 18.5 | 2.3 | 8.0 |
| Comparative Example 2 | 9 | - | B-1 | 0/10 | HT | 103 | 10 | 12.3 | 1.8 | 6.8 |
| *The unit of the composition ratio is a mass ratio. | | | | | | | | | | |

As shown in Table 1, it can be seen that the inks of Examples 1 to 10 containing the first reactive dye including a relatively large number of sulfonate groups and the second reactive dye including a relatively large number of amide groups and/or hydroxy groups have a high color density of the front surface and a low color density ratio between the front and back surfaces.

Particularly, it can be seen that a higher content of the first reactive dye is likely to increase the color density of the back surface and that a higher content of the second reactive dye is likely to increase the color density of the front surface (comparison among Examples 1, 6, and 7).

Furthermore, in Examples 3 and 4, in which the reaction temperature is as high as 95°C or more in the color development, both the front surface density and the back surface density are higher and additionally, the color density ratio between the front and back surfaces is smaller than those in Examples 2, in which the reaction temperature is 90°C (comparison among Examples 2 to 4). It is conceived that this is because dehydrogenation reaction of Dye B-1 (second reactive dye) adsorbed on the surface easily proceeds and the front surface density easily increases in Examples 3 and 4 than in Example 2. Moreover, the reaction temperature rises less extremely when the high temperature steaming method (H. T. steaming method) is used as the reaction method in the color development than when the dry heating method (D. T. baking method) is used, and it is thus indicated that the entire reaction easily proceeds and both the front surface density and the back surface density easily increase (comparison between Examples 4 and 5).

In contrast to this, it can be seen that the ink of Comparative Examples 1, which contains the first reactive dye but the second reactive dye, has a low front surface color density although having a high back surface color density and that the color density ratio between the front and back surfaces is high. It is conceived that this is because the ink of Comparative Examples 1 does not contain the second reactive dye, which easily remains on the front surface.

Meanwhile, it can be seen that the ink of Comparative Examples 2, which contains the second reactive dye but the first reactive dye, has a low back surface color density although having a high front surface color density and that the color density ratio between the front and back surfaces is high. It is conceived that this is because the ink of Comparative Examples 2 does not contain the first reactive dye, which easily penetrates to the back surface.

Although embodiments of the present invention have been described and illustrated in detail, it is clearly understood that the same is by way of illustration and example only and not limitation, the scope of the present invention should be interpreted by terms of the appended claims.

**Industrial Applicability**

The present invention can provide an inkjet textile printing ink capable of sufficiently reduce the color density ratio between the front and back surfaces of an image and an inkjet textile printing method including use of the ink.

**Reference Signs List**

P Cloth

2 Conveying section
21 Adhesive belt
22 Support roller
23 Conveying roller
24 Nip roller
5 Head carriage
6 Warm-air-adding section
6A Fan
6B Heating element

**Claims**

**1.** An inkjet textile printing ink for printing an image on a cloth including hydroxy groups, the inkjet textile printing ink comprising a reactive dye, a water-soluble organic solvent and water,
the reactive dye comprising:

a first reactive dye that has at least a sulfonate group and optionally further has an amide group and/or hydroxy group and

a second reactive dye that has at least an amide group and/or hydroxy group and optionally further has a sulfonate group,
wherein
the number of sulfonate groups contained in one molecule of the second reactive dye is smaller than the number of sulfonate groups contained in one molecule of the first reactive dye, and
the total number of sulfonate groups, amide groups, and hydroxy groups contained in one molecule of the second reactive dye is equivalent to the total number of sulfonate groups, amide groups, and hydroxy groups contained in one molecule of the first reactive dye, and
a hue difference ΔS*, which is represented by a distance on an ab-plane in the CIE 1976 L*a*b* color system between the second reactive dye and the first reactive dye, is 4 or less.

**2.** The inkjet textile printing ink according to claim 1, wherein a content ratio between the first reactive dye and the second reactive dye as a mass ratio is the first reactive dye/the second reactive dye = 95/5 to 50/50.

**3.** The inkjet textile printing ink according to claim 1 or 2, wherein the first reactive dye is a reactive dye having a sulfoxyethylsulfonyl group.

**4.** The inkjet textile printing ink according to any of claims 1 to 3, wherein the first reactive dye and the second reactive dye have the same pigment base material.

**5.** The inkjet textile printing ink according to any of claims 1 to 4, wherein the ink has a pH of 4 to 7.

**6.** An inkjet textile printing method, the method comprising the steps of:

ejecting a droplet of the inkjet ink according to any of claims 1 to 5 from a recording head to form an image on a cloth including a hydrophilic resin having a hydroxy group applied thereto, and
heating the cloth having the image formed thereon to fix the image.

**7.** The inkjet textile printing method according to claim 6, wherein the cloth having the image formed thereon is heated to 95°C or more in the image fixing.

**8.** The inkjet textile printing method according to claim 6 or 7, wherein the cloth comprises a cellulose fiber or a protein fiber.

## Patentansprüche

**1.** Textiltintenstrahldrucktinte zum Aufdrucken eines Bilds auf einen Hydroxylgruppen beinhaltenden Stoff, wobei die Textiltintenstrahldrucktinte einen Reaktivfarbstoff, ein wasserlösliches organisches Lösungsmittel und Wasser umfasst,
wobei der Reaktivfarbstoff umfasst:

einen ersten Reaktivfarbstoff, welcher zumindest eine Sulfonatgruppe aufweist und gegebenenfalls weiterhin eine Amidgruppe und/oder Hydroxylgruppe aufweist, und
einen zweiten Reaktivfarbstoff, welcher zumindest eine Amidgruppe und/oder Hydroxylgruppe aufweist und gegebenenfalls weiterhin eine Sulfonatgruppe aufweist,
wobei:

die Zahl der in einem Molekül des zweiten Reaktivfarbstoffs enthaltenen Sulfonatgruppen kleiner ist als die Zahl der in einem Molekül des ersten Reaktivfarbstoffs enthaltenen Sulfonatgruppen, und
die Gesamtzahl der in einem Molekül des zweiten Reaktivfarbstoffs enthaltenen Sulfonatgruppen, Amidgruppen und Hydroxylgruppen der Gesamtzahl der in einem Molekül des ersten Reaktivfarbstoffs enthaltenen Sulfonatgruppen, Amidgruppen und Hydroxylgruppen entspricht, und
der Farbunterschied ΔS*, welcher durch den Abstand zwischen dem zweiten Reaktivfarbstoff und dem ersten Reaktivfarbstoff auf einer ab-Ebene im CIE 1976 L*a*b*-Farbsystem repräsentiert wird, 4 oder weniger beträgt.

**2.** Textiltintenstrahldrucktinte gemäß Anspruch 1, wobei das als Massenverhältnis angegebene Anteilsverhältnis zwischen dem ersten Reaktivfarbstoff und dem zweiten Reaktivfarbstoff wie folgt ist: erster Reaktivfarbstoff/zweiter Reaktivfarbstoff = 95/5 bis 50/50.

**3.** Textiltintenstrahldrucktinte gemäß Anspruch 1 oder 2, wobei es sich bei dem ersten Reaktivfarbstoff um einen Reaktivfarbstoff mit einer Sulfoxyethylsulfonylgruppe handelt.

**4.** Textiltintenstrahldrucktinte gemäß einem der Ansprüche 1 bis 3, wobei der erste Reaktivfarbstoff und der zweite Reaktivfarbstoff das gleiche Pigmentbasismaterial aufweisen.

**5.** Textiltintenstrahldrucktinte gemäß einem der Ansprüche 1 bis 4, wobei die Tinte einen pH-Wert von 4 bis 7 aufweist.

**6.** Textiltintenstrahldruckverfahren, wobei das Verfahren die Schritte umfasst:

Ausstoßen eines Tröpfchens der Tintenstrahltinte gemäß einem der Ansprüche 1 bis 5 aus einem Aufzeichnungskopf, um auf einem ein hydrophiles Harz mit einer hieran angebrachten Hydroxylgruppe beinhaltenden Stoff ein Bild zu erzeugen, und
Erwärmen des Stoffs mit dem hierauf erzeugten Bild, um das Bild zu fixieren.

**7.** Textiltintenstrahldruckverfahren gemäß Anspruch 6, wobei der Stoff mit dem hierauf erzeugten Bild im Rahmen der Fixierung des Bilds auf 95°C oder mehr erwärmt wird.

**8.** Textiltintenstrahldruckverfahren gemäß Anspruch 6 oder 7, wobei der Stoff eine Cellulosefaser oder eine Proteinfaser umfasst.

## Revendications

**1.** Encre d'impression textile à jet d'encre destinée à imprimer une image sur un tissu comportant des groupes hydroxy, l'encre d'impression textile à jet d'encre comprenant une teinture réactive, un solvant organique soluble dans l'eau et de l'eau,
la teinture réactive comprenant :

une première teinture réactive qui comporte au moins un groupe sulfonate et comporte facultativement en outre un groupe amide et/ou un groupe hydroxy et
une deuxième teinture réactive qui comporte au moins un groupe amide et/ou un groupe hydroxy et comporte facultativement en outre un groupe sulfonate,
dans laquelle
le nombre de groupes sulfonate contenus dans une molécule de la deuxième teinture réactive est plus petit que le nombre de groupes sulfonate contenus dans une molécule de la première teinture réactive, et
le nombre total de groupes sulfonate, de groupes amide, et de groupes hydroxy contenus dans une molécule de la deuxième teinture réactive est équivalent au nombre total de groupes sulfonate, de groupes amide, et de groupes hydroxy contenus dans une molécule de la première teinture réactive, et
une différence de teinte $\Delta S^*$, qui est représentée par une distance sur un plan ab du système colorimétrique $L^*a^*b^*$ CIE 1976 entre la deuxième teinture réactive et la première teinture réactive, est de 4 ou moins.

**2.** Encre d'impression textile à jet d'encre selon la revendication 1, dans laquelle un rapport de teneur entre la première teinture réactive et la deuxième teinture réactive en tant que rapport massique est première teinture réactive/deuxième teinture réactive = 95/5 à 50/50.

**3.** Encre d'impression textile à jet d'encre selon la revendication 1 ou 2, dans laquelle la première teinture réactive est une teinture réactive ayant un groupe sulfoxyéthylsulfonyle.

**4.** Encre d'impression textile à jet d'encre selon l'une quelconque des revendications 1 à 3, dans laquelle la première teinture réactive et la deuxième teinture réactive ont le même matériau de base pigmentaire.

**5.** Encre d'impression textile à jet d'encre selon l'une quelconque des revendications 1 à 4, dans laquelle l'encre a un pH de 4 à 7.

**6.** Procédé d'impression textile à jet d'encre, le procédé comprenant les étapes de :

éjection d'une gouttelette de l'encre à jet d'encre selon l'une quelconque des revendications 1 à 5 depuis une tête d'enregistrement pour former une image sur un tissu comportant une résine hydrophile auquel est appliqué un groupe hydroxy, et
chauffage du tissu sur lequel est formée l'image pour fixer l'image.

**7.** Procédé d'impression textile à jet d'encre selon la revendication 6, dans lequel le tissu sur lequel est formée l'image est chauffé à 95 °C ou plus dans la fixation d'image.

**8.** Procédé d'impression textile à jet d'encre selon la revendication 6 ou 7, dans lequel le tissu comprend une fibre de cellulose ou une fibre de protéine.

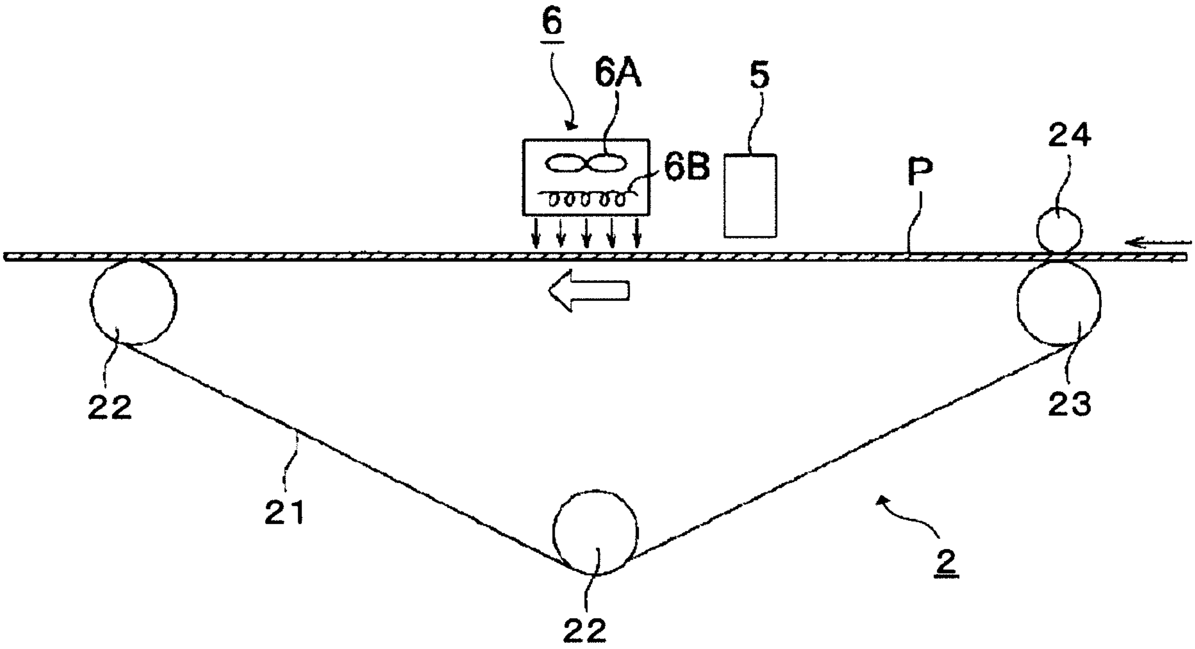


FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001089982 A
- JP 9279488 A
- JP H9279488 B
- JP 62053492 A
- JP 3046589 A